# EUROPÄISCHE PATENTSCHRIFT

(11) **EP 2 920 778 B1**
(45) Veröffentlichungstag und Bekanntmachung des Hinweises auf die Patenterteilung: **06.03.2019**
(21) Anmeldenummer: 13789786.4
(22) Anmeldetag: 12.11.2013
(51) Int. Cl.: G05D 1/00, B60R 1/00, G08G 1/16, B62D 15/02, G06K 9/00

(54) **VERFAHREN ZUM DURCHFÜHREN EINES ZUMINDEST SEMI-AUTONOMEN PARKVORGANGS EINES KRAFTFAHRZEUGS IN EINE GARAGE, PARKASSISTENZSYSTEM UND KRAFTFAHRZEUG**
METHOD FOR CARRYING OUT AN AT LEAST SEMI-AUTONOMOUS PARKING PROCESS OF A MOTOR VEHICLE INTO A GARAGE, PARKING ASSISTANCE SYSTEM AND MOTOR VEHICLE
PROCÉDÉ POUR EFFECTUER UNE MANOEUVRE DE STATIONNEMENT AU MOINS SEMI-AUTONOME D'UN VÉHICULE AUTOMOBILE DANS UN GARAGE, SYSTÈME D'ASSISTANCE AU STATIONNEMENT ET VÉHICULE AUTOMOBILE

(30) Priorität: 14.11.2012 DE 102012022336
(43) Veröffentlichungstag der Anmeldung: 23.09.2015
(73) Patentinhaber: Valeo Schalter und Sensoren GmbH, 74321 Bietigheim-Bissingen (DE)
(72) Erfinder: HEIMBERGER, Markus, 74321 Bietigheim-Bissingen (DE); VOVKUSHEVSKY, Vsevolod, 74321 Bietigheim-Bissingen (DE); GRIMM, Oliver, 74223 Flein (DE)
(86) Internationale Anmeldenummer: PCT/EP2013/073604
(87) Internationale Veröffentlichungsnummer: WO 2014/076071

(56) Entgegenhaltungen:
- WO-A1-2011/154242
- DE-A1-102009 057 837
- DE-A1-102010 056 064

## Beschreibung

Die Erfindung betrifft ein Verfahren zum Durchführen eines zumindest semi-autonomen Parkvorgangs eines Kraftfahrzeugs in eine Garage, wobei mittels eines Parkassistenzsystems des Kraftfahrzeugs die Garage detektiert wird und eine aktuelle Lage des Kraftfahrzeugs relativ zur Garage bestimmt wird, und wobei nach Detektion der Garage der zumindest semi-autonome Parkvorgang abhängig von der aktuellen Lage des Kraftfahrzeugs relativ zur Garage durchgeführt wird. Die Erfindung betrifft außerdem ein Parkassistenzsystem zum Durchführen eines solchen Verfahrens sowie ein Kraftfahrzeug mit einem derartigen Fahrerassistenzsystem.

Parkassistenzsysteme für Kraftfahrzeuge sind bereits Stand der Technik. Sie dienen zum Unterstützen des Fahrers beim Einparken seines Kraftfahrzeugs in eine Parklücke und gegebenenfalls auch beim Ausparken aus der Parklücke. Es sind dabei semiautomatische Parkassistenzsysteme einerseits sowie vollautonome Parkassistenzsysteme andererseits bekannt. Bei semi-autonomen Parkassistenzsystemen übernimmt das System lediglich die Querführung und somit die Lenkung des Kraftfahrzeugs, während der Fahrer selbst Gas geben und bremsen muss. Vollautomatische Parkassistenzsysteme wiederum steuern automatisch sowohl die Querführung als auch die Längsführung des Kraftfahrzeugs, wobei der Fahrer den automatischen Parkvorgang lediglich freizugeben braucht und ihn jederzeit auch unterbrechen kann. Es sind auch semi-autonome Systeme bekannt, bei denen lediglich Lenkhinweise an den Fahrer ausgegeben werden und der Fahrer sowohl die Längsführung als auch die Querführung selbst übernehmen muss. Allen Systemarten ist gemein, dass das Parkassistenzsystem anhand von erfassten Umgebungsinformationen die Parklücke detektieren und die aktuelle Lage des Kraftfahrzeugs relativ zur Parklücke bestimmen kann. Abhängig von der aktuellen Lage des Kraftfahrzeugs berechnet das System dann eine für den Parkvorgang geeignete Einparkbahn, entlang welcher das Kraftfahrzeug kollisionsfrei in die Zielposition in der Parklücke vollautomatisch oder semi-autonom geführt wird.

Vorliegend richtet sich das Interesse auf ein zumindest semi-autonomes Parkassistenzsystem, mittels welchem das Kraftfahrzeug semi-autonom oder vollautomatisch in eine Garage eingeparkt werden kann. Solche Systeme gehören ebenfalls bereits zum Stand der Technik. So beschreibt beispielsweise das Dokument EP 1 249 379 A1 bereits ein Parkassistenzsystem, bei welchem der Fahrer sein Kraftfahrzeug beim Einparken beispielsweise vor einer gewählten Garagenzufahrt abstellen kann und das abgestellte Fahrzeug vor dem Start des Einparkvorganges verlassen kann. Der Fahrzeugführer aktiviert dann mit einer Sendeeinrichtung das Parkassistenzsystem im Fahrzeug, welches vollkommen selbsttätig das Fahrzeug mittels gemessener Positions- und Umgebungsdaten und daraus errechneter Steuerbefehle über die entsprechenden Antriebs- und Lenkungsstellglieder in die vorgesehene Zielposition steuert und dort sicher abstellt.

Aus der DE 10 2005 008 874 A1 ist ein Verfahren zur Bedienung einer bildgestützten Navigation bei Fahrzeugen bekannt, wobei Umgebungsinformationen erfasst und auf einer optischen Anzeige dargestellt werden. Mit Hilfe der dargestellten Umgebungsinformationen kann sodann eine Zielposition angefahren werden. Auf der Anzeige kann beispielsweise die Darstellung eines Lagerhauses zur Auswahl als anzufahrendes Objekt angezeigt werden. Der Fahrer wählt dann das Lagerhaus als anzufahrendes Objekt aus, indem er dieses auf der optischen Anzeige mit einem geeigneten Eingabemittel antippt. Das Objekt wird sodann als Zielobjekt optisch hervorgehoben dargestellt. Der Fahrer kann dann auf der Anzeige mit dem Eingabemittel eine Zielregion auswählen, nämlich beispielsweise anhand von Zielpunkten oder mittels eines flächigen Eingabemittels. Im Anschluss an die Eingabe werden dann anhand der Zielpunkte mittels eines Bildverarbeitungsalgorithmus automatisch Geraden festgelegt, welche das Tor des Lagerhauses als Zielregion festlegen. Der Fahrer braucht folglich selbst festzulegen, wo sich das Tor des Lagerhauses befindet. Das System ist nicht dazu in der Lage, das Tor automatisch zu detektieren.

WO 2011/154242 A1 beschreibt ein Verfahren zum Durchführen eines zumindest semi-autonomen Parkvorgangs eines Kraftfahrzeugs in eine Garage. wobei mittels eines Parkassistenzsystems des Kraftfahrzeugs die Garage detektiert wird und eine aktuelle Lage des Kraftfahrzeugs relativ zur Garage bestimmt wird, und wobei nach Detektion der Garage der zumindest semi-autonome Parkvorgang abhängig von der aktuellen Lage des Kraftfahrzeugs relativ zur Garage durchgeführt wird,

Bei Parkassistenzsystemen, welche zum semi-autonomen oder vollautomatischen Einparken in eine Garage ausgebildet sind, besteht eine besondere Herausforderung darin, die Garage automatisch durch das Parkassistenzsystem zu detektieren. Das Parkassistenzsystem soll dazu in der Lage sein, die Garage als Zielposition des Fahrzeugs zu detektieren, ohne dass der Fahrer dazu eine spezielle Eingabe vorzunehmen braucht. Das Parkassistenzsystem soll also ein Parkszenario detektieren können, bei welchem der Fahrer sein Kraftfahrzeug vor der Garage oder in der Umgebung der Garage abstellt.

Es ist Aufgabe der Erfindung, eine Lösung aufzuzeigen, wie bei einem Verfahren der eingangs genannten Gattung die Garage zuverlässig durch das Parkassistenzsystem selbsttätig detektiert werden kann.

Diese Aufgabe wird erfindungsgemäß durch ein Verfahren, durch ein Parkassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Durchführen eines zumindest semi-autonomen Parkvorgangs eines Kraftfahrzeugs in eine Garage. Mittels eines Parkassistenzsystems des Kraftfahrzeugs wird die Garage detektiert und eine aktuelle Lage des Kraftfahrzeugs relativ zur Garage anhand von Umgebungsinformationen bestimmt. Nach Detektion der Garage wird der zumindest semi-autonome Parkvorgang abhängig von der aktuellen Lage des Kraftfahrzeugs relativ zur Garage durchgeführt. Dabei kann beispielsweise eine Einparkbahn abhängig von der aktuellen Lage berechnet werden. Erfindungsgemäß ist vorgesehen, dass mittels einer Kamera des Parkassistenzsystems ein Bild der Garage erfasst wird und das Detektieren der Garage umfasst, dass mittels einer Bildverarbeitungseinrichtung des Parkassistenzsystems das Bild einer Mustererkennung hinsichtlich einer Garageneinfahrt unterzogen wird und mittels der Mustererkennung die Garage selbsttätig durch das Parkassistenzsystem identifiziert wird. Als Muster der Garageneinfahrt werden zumindest eine vertikale und eine horizontale, die Garageneinfahrt begrenzende Kanten mittels der Bildverarbeitungseinrichtung in dem Bild detektiert. Die Bestimmung der aktuellen Lage des Kraftfahrzeugs relativ zur Garage umfasst, dass anhand eines Winkels zumindest einer der Ecken, eine aktuelle Ausrichtung des Kraftfahrzeugs bezüglich der Garage bestimmt wird.

Zur Detektion der Garage wird also zumindest ein Bild der Umgebung mittels einer Kamera des Kraftfahrzeugs aufgenommen, und das Bild wird im Hinblick auf ein ganz spezielles Muster, nämlich im Hinblick auf eine Garageneinfahrt, untersucht. Die Detektion der Garage erfolgt somit durch Identifizierung der Garageneinfahrt in dem Bild.

Die Erfindung macht sich dabei die Tatsache zunutze, dass eine Garageneinfahrt typischerweise sowohl seitlich nach links und nach rechts als auch nach oben begrenzt ist und diese zueinander in einer ganz spezifischen Weise angeordneten Begrenzungen mittels einer Mustererkennung ohne viel Aufwand im Kamerabild erkannt werden können, da die Begrenzungen einen relativ hohen Kontrast insbesondere zur Öffnung der Garageneinfahrt selbst aufweisen, und zwar selbst dann, wenn die Einfahrt durch ein Garagentor verschlossen ist. Die Szene bzw. die Garageneinfahrt lässt sich somit durch zwei vertikale und eine horizontale Linie beschreiben und detektieren, die auf den vertikalen Linien aufliegt oder sich in unmittelbarer Nähe der vertikalen Linien befindet. Durch das erfindungsgemäße Verfahren wird erreicht, dass das Parkassistenzsystem die Garage selbsttätig bzw. automatisch detektieren kann, ohne dass der Fahrer eine entsprechende Zielposition selbst angeben muss. Nach Detektion der Garage durch das Parkassistenzsystem kann der Fahrer nun den zumindest semi-autonomen Parkvorgang freigeben, und das Kraftfahrzeug wird zumindest semi-automatisch in die Garage eingeparkt. Der Fahrer kann dabei entweder aus dem Fahrzeug aussteigen und den Parkvorgang mittels einer Fernbedienung freigeben oder er kann im Kraftfahrzeug bleiben und den Parkvorgang gegebenenfalls mit Hilfe von fahrzeugfesten Bedieneinrichtungen freigeben. Nach Detektion der Garage kann optional auch eine Information ausgegeben werden, dass die Garage detektiert wurde und der Fahrer nun die Möglichkeit der Freigabe des Parkvorgangs hat.

Die Kamera kann beispielsweise einen Umgebungsbereich vor dem Kraftfahrzeug erfassen und beispielsweise hinter der Windschutzscheibe angeordnet sein. Ergänzend oder alternativ kann auch eine Kamera verwendet werden, welche den Umgebungsbereich hinter dem Kraftfahrzeug erfasst. Eine solche Rückwärtskamera kann beispielsweise an dem hinteren Stoßfänger oder aber an der Heckklappe oder hinter der Heckscheibe platziert sein.

Die Kamera ist bevorzugt eine Videokamera, welche eine Vielzahl bzw. eine Sequenz von Bildern pro Sekunde liefert. Beispielsweise wird eine CCD-Kamera oder eine CMOS-Kamera verwendet. Die Bildverarbeitungseinrichtung identifiziert also das Muster der Garageneinfahrt in dem Kamerabild. Als Muster können dabei zumindest eine vertikale und eine horizontale, die Garageneinfahrt unmittelbar begrenzende Kanten in dem Bild identifiziert werden. Eine Garageneinfahrt ist nämlich neben dem Boden typischerweise durch drei Kanten begrenzt, nämlich zwei vertikal verlaufende und somit parallel zueinander angeordnete Kanten sowie eine horizontale Kante, die die beiden vertikalen Kanten im oberen Bereich miteinander verbindet. Zur Kantenerkennung kann beispielsweise das Sobelfilter implementiert werden, mittels welchem die horizontale Kante und die vertikalen Kanten identifiziert werden. Auf diesem Wege lässt sich die Garageneinfahrt zuverlässig und ohne viel Rechenaufwand erkennen.

Die aktuelle Lage des Kraftfahrzeugs relativ zur Garage wird zunächst anhand eines Winkels zumindest einer der identifizierten Ecken bestimmt. Abhängig von dieser Ausrichtung des Kraftfahrzeugs kann dann der zumindest semi-autonome Parkvorgang durchgeführt werden, und insbesondere eine Einparkbahn berechnet werden, entlang welcher das Kraftfahrzeug geführt wird.

Es ist bevorzugt, dass die Bestimmung der aktuellen Lage des Kraftfahrzeugs relativ zur Garage weiterhin umfasst, dass anhand des Abbilds der Garageneinfahrt nämlich anhand einer Ausrichtung zumindest einer der Kanten in dem Bild eine aktuelle Ausrichtung des Kraftfahrzeugs bezüglich der Garage bestimmt wird, vorzugsweise anhand des Bildes der Kamera. Die Bestimmung der aktuellen Lage des Kraftfahrzeugs relativ zur Garage kann umfassen, dass anhand des Abbilds der Garageneinfahrt eine aktuelle Ausrichtung bzw. ein Orientierungswinkel des Kraftfahrzeugs bezüglich der Garage bestimmt wird. Dabei wird die Ausrichtung des Kraftfahrzeugs insbesondere anhand einer Ausrichtung zumindest einer der Kanten, insbesondere der horizontalen Kante, in dem Bild bestimmt Anhand des Kamerabilds lässt sich die genaue Ausrichtung des Kraftfahrzeugs in Bezug auf die Garage und somit ein Winkel zwischen der Fahrzeuglängsachse und der Garagenlängsachse mit relativ hoher Präzision ermitteln.

Werden als Muster der Garageneinfahrt zumindest eine vertikale Kante und eine horizontale Kante detektiert, so kann das Identifizieren der Garage umfassen, dass ein Verhältnis der jeweiligen Längen der vertikalen Kante einerseits und der horizontalen Kante andererseits im Bild bestimmt wird. Durch Auswertung des Verhältnisses kann dann plausibilisiert werden, ob es sich bei dem erkannten Muster tatsächlich um eine Garageneinfahrt handelt oder nicht. Die Kanten weisen nämlich typischerweise ein Längenverhältnis auf, das in einem bestimmten Wertebereich liegt. In der Regel ist die horizontale Kante nämlich ein wenig länger als die vertikalen Kanten. Damit können Fehler bei der Detektion der Garage verhindert werden.

Ergänzend oder alternativ können als Muster der Garageneinfahrt zumindest zwei Ecken der Garageneinfahrt mittels der Bildverarbeitungseinrichtung in dem Bild detektiert werden. Es erfolgt also insbesondere eine Mustererkennung der beiden rechten Winkel, welche durch die drei Linien gebildet sind, nämlich die beiden vertikalen Linien und die horizontale Linie, die die Garageneinfahrt nach oben hin begrenzt. Durch diese beiden Winkel können auch die Linien beschrieben werden. Auch die Detektion der Ecken sorgt für eine zuverlässige und fehlerfreie Erkennung der Garageneinfahrt.

Weiterhin ergänzend oder alternativ kann vorgesehen sein, dass als Muster der Garageneinfahrt zumindest eine horizontale Kante - nämlich die obere Kante - detektiert wird und das Identifizieren der Garage umfasst, dass in dem Bild nach einem Horizont und somit nach einer Grenzlinie zwischen den abgebildeten Objekten (etwa einem die Garage umfassenden Haus) und dem Himmel gesucht wird. Das Identifizieren des Horizonts über der oberen horizontalen Kante der Garageneinfahrt sorgt für eine weitere Plausibilisierung.

Die Bestimmung der aktuellen Lage des Kraftfahrzeugs kann auch umfassen, dass anhand des Abbilds der Garageneinfahrt eine aktuelle Position des Fahrzeugs bezüglich der Garage und/oder eine Entfernung des Kraftfahrzeugs von der Garage bestimmt wird. Diese tatsächliche Entfernung kann anhand eines Abstands der Garageneinfahrt von der unteren Bildkante im Bild und/oder abhängig von der Länge der Kanten im Bild errechnet werden. Die relative Position wiederum lässt sich anhand der Position der Garageneinfahrt im Bild bestimmen. Auf diese Art und Weise lässt sich dann zumindest eine Teileinparkbahn ermitteln, entlang welcher das Kraftfahrzeug in Richtung zur Garage geführt wird, um dann die Garage auch mittels zumindest eines weiteren Sensors erfassen zu können, wie beispielsweise mit Hilfe eines Ultraschallsensors und/oder eines Radarsensors und/oder eines Lidarsensors.

Es erweist sich als vorteilhaft, wenn die Garageneinfahrt mittels zumindest eines von der Kamera verschiedenen Sensors, insbesondere zumindest eines Abstandssensors, des Parkassistenzsystems erfasst wird und das Identifizieren der Garage anhand von Sensordaten des zumindest einen Sensors überprüft bzw. plausibilisiert wird. Hierbei sind zwei verschiedene Szenarien möglich: Zum einen kann die Garage zunächst lediglich anhand des Bilds der Kamera identifiziert werden, wenn sich die Garage außerhalb des Erfassungsbereiches des Sensors befindet. Hier kann der Sensor die Garage erst dann erfassen, wenn sich das Kraftfahrzeug der Garage annähert. Bei diesem Szenario wird der Parkvorgang somit teilweise ausschließlich anhand des Bildes durchgeführt, und nach Erfassen der Garage durch den Sensor wird anhand der Sensordaten noch einmal überprüft, ob es sich um eine Garage handelt oder nicht. Die weitere Führung des Fahrzeugs kann dann zumindest anhand von Sensordaten des Sensors erfolgen. Zum anderen kann auch ein Szenario auftreten, bei welchem bereits in der Ausgangsposition des Fahrzeugs sich die Garage im Erfassungsbereich des Sensors befindet. Hier kann bereits in der aktuellen Ausgangsposition des Fahrzeugs eine Plausibilisierung anhand von Sensordaten des Sensors vorgenommen werden. Als Abstandssensor kann insbesondere zumindest ein Ultraschallsensor und/oder zumindest ein Radarsensor und/oder zumindest ein Lidarsensor, insbesondere ein Laserscanner, verwendet werden. Insbesondere mit Hilfe eines Radarsensors und/oder eines Laserscanners ist es mit hoher Genauigkeit möglich, die Umgebung des Fahrzeugs abzutasten und somit ein Bild der Umgebung zu gewinnen bzw. auch die Garageneinfahrt zu detektieren. Bei einer geringen Entfernung des Fahrzeugs von der Garage kann selbige auch mittels Ultraschallsensoren erfasst werden, und das Kraftfahrzeug kann in die Garage geregelt geführt werden.

Bevorzugt wird anhand des Abbilds der Garageneinfahrt eine Höhe der Garageneinfahrt bestimmt. Die Bestimmung der Höhe der Garageneinfahrt erfolgt dabei vorzugsweise in Abhängigkeit von der Länge zumindest einer der vertikalen Kanten in dem Bild. Die ermittelte Höhe der Garageneinfahrt kann dann mit der tatsächlichen Höhe des Fahrzeugs verglichen werden. Auf diesem Wege kann der Fahrer gegebenenfalls davor gewarnt werden, dass sein Kraftfahrzeug für die identifizierte Garage zu hoch ist. Ist die Höhe des Fahrzeugs größer oder gleich der ermittelten Garagenhöhe, kann gegebenenfalls ein akustisches und/oder optisches Warnsignal an den Fahrer abgegeben werden. Bei der Bestimmung der Höhe kann auch der Abstand zur Garage berücksichtigt werden, der mittels des zumindest einen Sensors gemessen wird.

In einer bevorzugten Ausführungsform wird anhand des Abbilds der Garageneinfahrt, insbesondere abhängig von der ermittelten Ausrichtung und/oder Position des Fahrzeugs relativ zur Garage und/oder abhängig von der Entfernung des Fahrzeugs von der Garage und somit insgesamt abhängig von der aktuellen Lage des Fahrzeugs relativ zur Garage, eine Einparkbahn von der aktuellen Position des Fahrzeugs zumindest zu einer Zwischenposition zwischen der aktuellen Position und einer Zielposition in der Garage ermittelt, und das Fahrzeug wird entlang der Einparkbahn vollautomatisch oder semi-autonom geführt. Die Führung des Kraftfahrzeugs in die Zwischenposition erfolgt vorzugsweise ausschließlich anhand des Abbilds der Garageneinfahrt oder aber zusätzlich anhand der Sensordaten zumindest eines Sensors. Diese Ausführungsform erweist sich jedoch insbesondere dann als vorteilhaft, wenn in der Ausgangsposition des Fahrzeugs sich die Garage außerhalb des Erfassungsbereiches des zumindest einen Sensors befindet. Das Fahrzeug kann dann in die Zwischenposition ausschließlich anhand des Abbilds der Garageneinfahrt geführt werden, wobei in der Zwischenposition die Garage bereits durch den zumindest einen Sensor erfasst werden kann. Durch die Führung des Fahrzeugs in die Zwischenposition wird somit erreicht, dass das Kraftfahrzeug auch dann vollständig in die Garage kollisionsfrei eingeparkt werden kann, wenn sich die Garage in der ursprünglichen Anfangsposition des Fahrzeugs außerhalb des Erfassungsbereiches des Sensors befindet. Das Fahrzeug wird nämlich in eine solche Zwischenposition geführt, in welcher vorzugsweise sichergestellt ist, dass auch weitere Sensoren die Garage erfassen können und das Fahrzeug sicher in die Zielposition in der Garage geführt werden kann. Wird das Fahrzeug jedoch in einem geringen Abstand zur Garage abgestellt, kann auf die Bestimmung der Zwischenposition gegebenenfalls verzichtet werden.

Vorzugsweise wird die Einparkbahn anhand des Abbilds der Garageneinfahrt in der Weise bestimmt, dass in der Zwischenposition eine Mittellängsachse des Fahrzeugs durch die Garageneinfahrt verläuft, insbesondere parallel zu einer Mittellängsachse der Garage orientiert ist, noch bevorzugter mit der Mittellängsachse der Garage zusammenfällt. In der Zwischenposition ist das Kraftfahrzeug somit so ausgerichtet, dass die weitere Führung in die Zielposition in der Garage ohne viel Aufwand erfolgen kann. Von der Zwischenposition in die Zielposition kann das Fahrzeug beispielsweise auch mit Hilfe von Abstandssensoren geführt werden, die die seitlichen Abstände zu den Wänden der Garage sowie die Abstände zu Hindernissen erfassen, die sich vor dem Kraftfahrzeug - etwa in der Garage - befinden.

Wird das Kraftfahrzeug entlang der Einparkbahn geführt, so kann bei Annäherung des Kraftfahrzeugs an die Garage selbige Garage mittels zumindest eines Sensors, insbesondere eines Abstandssensors, des Parkassistenzsystems erfasst werden. Anhand von Sensordaten dieses Sensors kann dann die Einparkbahn bis zur Zielposition vervollständigt oder eine bereits anhand des Bildes ermittelte vollständige Einparkbahn korrigiert werden. Diese Ausführungsform beruht darauf, dass die Entfernung zu Hindernissen, wie beispielsweise zu den Wänden der Garage, mit höherer Genauigkeit mittels Abstandssensoren als anhand des Kamerabilds bestimmt werden kann. Befindet sich die Garage bereits in dem Erfassungsbereich des zumindest einen Sensors, so kann die ursprünglich ermittelte Einparkbahn korrigiert oder aber die unvollständig ermittelte Einparkbahn vervollständigt werden.

Es kann auch vorgesehen sein, dass nach Erfassen der Garage durch den zumindest einen Sensor die Einparkbahn fortlaufend anhand von jeweils aktuellen Sensordaten des zumindest einen Sensors korrigiert wird. Hier erfolgt bevorzugt eine Regelung der seitlichen Abstände zu den Wänden der Garage abhängig von den aktuell gemessenen Abständen. Dies kann beispielsweise so aussehen, dass das Kraftfahrzeug anhand von aktuellen Sensordaten mittig zwischen den beiden Garagenwänden geführt wird. Werden jedoch weitere Hindernisse in der Garage selbst detektiert, werden diese kollisionsfrei umfahren.

Die Erfindung betrifft außerdem ein Parkassistenzsystem, welches zum Durchführen eines erfindungsgemäßen Verfahrens ausgebildet ist.

Ein erfindungsgemäßes Kraftfahrzeug umfasst ein erfindungsgemäßes Parkassistenzsystem.

Die mit Bezug auf das erfindungsgemäße Verfahren vorgestellten bevorzugten Ausführungsformen und deren Vorteile gelten entsprechend für das erfindungsgemäße Parkassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung ein Kraftfahrzeug mit einem Parkassistenzsystem gemäß einer Ausführungsform der Erfindung;
- Fig. 2: in schematischer Darstellung ein beispielhaftes Kamerabild; und
- Fig. 3: in schematischer Darstellung eine Draufsicht auf ein Parkszenario, wobei ein Verfahren gemäß einer Ausführungsform der Erfindung näher erläutert wird.

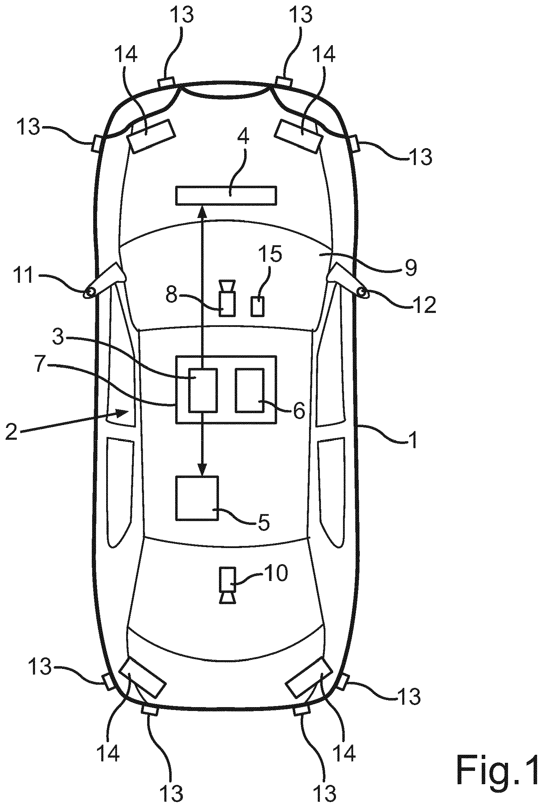

Ein in Fig. 1 dargestelltes Kraftfahrzeug 1 ist beispielsweise ein Personenkraftwagen. Das Kraftfahrzeug 1 umfasst ein Parkassistenzsystem 2, welches ein semi-autonomes oder vollautomatisches Parkassistenzsystem ist. Zum Parkassistenzsystem 2 gehört eine Steuereinrichtung 3 bzw. ein Steuergerät. Die Steuereinrichtung 3 steuert eine Lenkvorrichtung 4 und optional auch eine Antriebs- und Bremseinrichtung 5 des Kraftfahrzeugs 1 an. Die Steuereinrichtung 3 kann die Lenkvorrichtung 4 und optional auch die Antriebs- und Bremseinrichtung 5 automatisch betätigen, um die Querführung und gegebenenfalls die Längsführung des Kraftfahrzeugs 1 selbsttätig zu steuern.

Zum Parkassistenzsystem 2 gehört außerdem eine Bildverarbeitungseinrichtung 6, welche zum Verarbeiten von Bildern sowie gegebenenfalls zum Verarbeiten und Auswerten von Sensordaten ausgebildet ist. Die Steuereinrichtung 3 und die Bildverarbeitungseinrichtung 6 können gegebenenfalls in eine gemeinsame Recheneinrichtung 7 integriert sein (beispielsweise Signalprozessor oder dergleichen).

Das Parkassistenzsystem 2 umfasst eine Detektionseinrichtung, welche einerseits zumindest eine Kamera und andererseits optional zumindest einen Abstandssensor aufweist. Im Ausführungsbeispiel ist eine erste Kamera 8 hinter der Windschutzscheibe 9 des Kraftfahrzeugs 1 platziert und erfasst einen Umgebungsbereich vor dem Kraftfahrzeug 1. Eine zweite Kamera 10 ist im Heckbereich des Kraftfahrzeugs 1 angeordnet, etwa hinter der Heckscheibe oder aber an der Heckklappe, und erfasst den Umgebungsbereich hinter dem Kraftfahrzeug 1. Es können optional auch Kameras 11, 12 in die jeweiligen Außenspiegel des Kraftfahrzeugs 1 integriert sein. Alle Kameras 8, 10, 11, 12 stellen Bilder des jeweiligen Umgebungsbereiches bereit und übermitteln die aufgenommene Bilder an die Bildverarbeitungseinrichtung 6.

Zur Detektionseinrichtung gehören optional auch folgende Abstandssensoren: Ultraschallsensoren 13, die sowohl am vorderen als auch am hinteren Stoßfänger des Kraftfahrzeugs 1 verteilt angeordnet sind; Radarsensoren 14, welche beispielsweise in den jeweiligen Eckbereichen angeordnet sind; sowie ein Laserscanner 15, der beispielsweise hinter der Windschutzscheibe 9 angeordnet ist. Auch die genannten Abstandssensoren sind mit der Recheneinrichtung 7, nämlich insbesondere der Bildverarbeitungseinrichtung 6, gekoppelt, so dass die Recheneinrichtung 7 die Sensordaten dieser Sensoren verarbeiten kann.

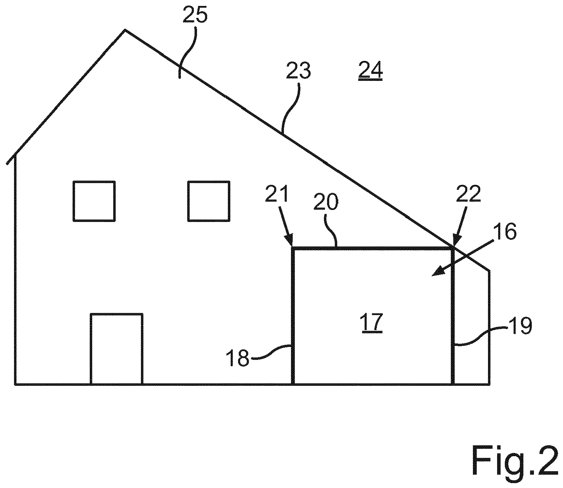

Das Parkassistenzsystem 2 ist zum Durchführen eines zumindest semi-autonomen Parkvorgangs des Kraftfahrzeugs 1 in eine Garage ausgebildet. Dazu kann die Bildverarbeitungseinrichtung 6 die Garage anhand von Bildern einer der Kameras 8, 10, 11, 12 detektieren. Je nachdem, ob das Fahrzeug 1 mit seiner Front oder mit seinem Heck in Richtung zur Garage abgestellt wird, kann die Garage entweder anhand eines Bildes der Kamera 8 oder aber anhand eines Bildes der Kamera 10 und gegebenenfalls auch anhand von Bildern der Kameras 11, 12 detektiert werden. Ein beispielhaftes Kamerabild ist in Fig. 2 dargestellt.

Wie aus Fig. 2 hervorgeht, ist eine Garage 16 bzw. ihre Garageneinfahrt 17 durch drei Kanten unmittelbar begrenzt, nämlich durch zwei vertikale Kanten 18, 19 sowie durch eine horizontale Kante 20. Während die vertikalen Kanten 18, 19 die Garageneinfahrt 17 seitlich nach links bzw. nach rechts begrenzen, ist die Garageneinfahrt 17 durch die horizontale Kante 20 nach oben hin begrenzt. Die Bildverarbeitungseinrichtung 6 untersucht die Bilder im Hinblick auf ein vorgegebenes Muster, und zwar hinsichtlich der Garageneinfahrt 17. Dabei können folgende Ausführungsformen vorgesehen sein:
- die Bildverarbeitungseinrichtung 6 identifiziert in dem Bild die Kanten 18, 19, 20 und die spezifische Anordnung der Kanten zueinander und dadurch die Garageneinfahrt 17 und/oder
- die Bildverarbeitungseinrichtung 6 identifiziert Ecken 21, 22, nämlich die oberen Ecken, der Garageneinfahrt 17 und erkennt somit die Garage 16 und/oder
- die Bildverarbeitungseinrichtung 6 erkennt über der horizontalen Kante 20 einen Horizont 23, d.h. eine Grenzlinie zwischen dem Himmel 24 und dem abgebildeten Haus 25.

Die Garageneinfahrt 17 wird also mittels einer Mustererkennung durch die Bildverarbeitungseinrichtung 6 erkannt. Die Garageneinfahrt 17 wird anhand eines charakteristischen Musters von zwei vertikalen Kanten 18, 19 und einer horizontalen Kante 20 bzw. von zwei vertikalen und einer horizontalen Linie identifiziert. Aus dem Bild können zunächst alle Kantenlinien extrahiert werden, und das charakteristische Muster der Garageneinfahrt 17 kann dann in den extrahierten Kantenlinien erkannt werden.

Ist die Garageneinfahrt 17 detektiert worden, so ermittelt die Recheneinrichtung 7 - beispielsweise die Bildverarbeitungseinrichtung 6 - die aktuelle Lage des Kraftfahrzeugs 1 bezüglich der Garageneinfahrt 17. Dies umfasst zunächst die Bestimmung der aktuellen Ausrichtung des Fahrzeugs 1 in Bezug auf die Garage 16. Unter der Ausrichtung wird dabei ein Orientierungswinkel und somit ein Winkel zwischen der Fahrzeuglängsachse und der Längsachse der Garage 16 verstanden. Dieser Winkel kann anhand der Orientierung bzw. Ausrichtung der horizontalen Kante 20 im Bild und/oder anhand des Winkels der jeweiligen Ecke 21, 22 bestimmt werden. Die Bestimmung der relativen Lage kann des Weiteren umfassen, dass auch die Entfernung des Fahrzeugs 1 von der Garage 16 bestimmt wird. Diese Entfernung kann anhand des Abstands der Garage 16 von der unteren Bildkante im Bild bestimmt werden. Des Weiteren ist es auch möglich, anhand der Abbildung der Garageneinfahrt 17 die genaue Position des Fahrzeugs 1 in Bezug auf die Garage 16 zu ermitteln, weil die Position der Garageneinfahrt 17 in dem Kamerabild von der tatsächlichen relativen Position des Fahrzeugs 1 bezüglich der Garage 16 abhängt.

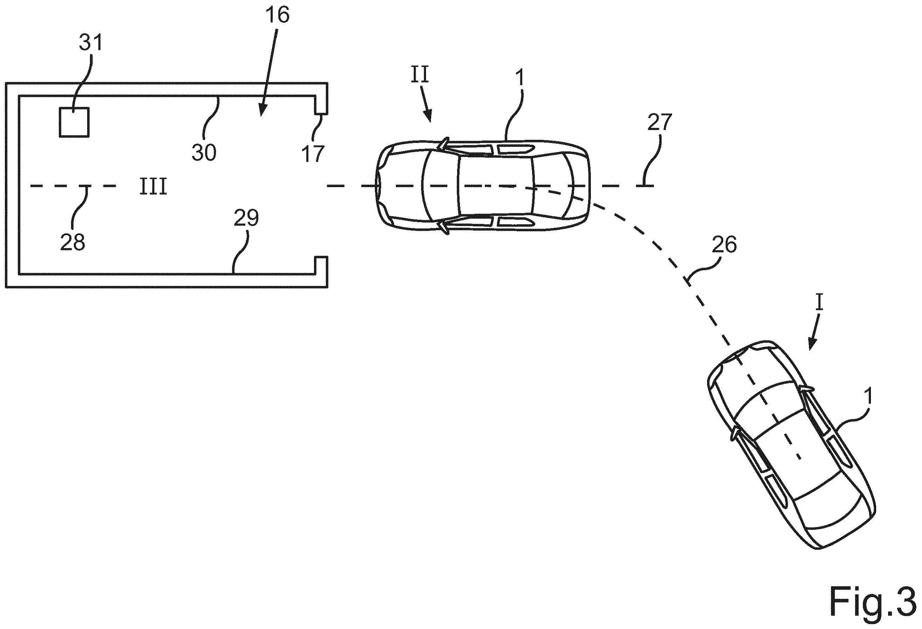

In Fig. 3 ist nun ein Parkszenario dargestellt, bei welchem das Kraftfahrzeug 1 in einer Ausgangsposition I abgestellt wird. Der Fahrer kann nun aus dem Fahrzeug 1 aussteigen oder im Innenraum des Fahrzeugs 1 bleiben. Gegebenenfalls kann der Fahrer auch auf einer Fernbedienung oder aber mittels einer fahrzeugfesten Bedieneinrichtung eine Eingabe vornehmen, mit welcher die Suche nach einer Garage 16 durch das Parkassistenzsystem 2 gestartet wird. Dazu kann zum Beispiel ein Knopf gedrückt werden. Hierbei sind verschiedenste Ausführungsformen vorgesehen: Zum einen kann sich diese Eingabe des Fahrers unmittelbar auf die Suche nach einer Garage 16 beziehen. Zum anderen kann sich diese Eingabe auch auf die Suche einer beliebigen Parkgelegenheit beziehen - in diesem Falle wird sowohl nach einer Garage 16 als auch nach herkömmlichen Parklücken gesucht. Gegebenenfalls kann die Suche nach einer Garage 16 auch automatisch durch das Parkassistenzsystem 2 eingeleitet werden, ohne dass der Fahrer eine Eingabe vorzunehmen hat. In diesem Falle wird nach der Garage 16 beispielsweise dann gesucht, wenn das Fahrzeug 1 abgestellt wird.

In der Ausgangsposition I untersucht die Bildverarbeitungseinrichtung 6 die Bilder hinsichtlich der Garageneinfahrt 17 und identifiziert in den Bildern das Muster der Garageneinfahrt 17. Die Garage 16 wird also dadurch erkannt, dass die Bildverarbeitungseinrichtung 6 das spezifische Muster der drei Kanten 18, 19, 20 in der spezifischen Anordnung zueinander detektiert. Dies kann durch die Detektion des Horizonts 23 und/oder dadurch plausibilisiert werden, dass ein Verhältnis der Länge der horizontalen Kante 20 zur vertikalen Kante 18 oder 19 berechnet wird.

Bei einer bereits erkannten Garageneinfahrt 17 berechnet die Recheneinrichtung 7 eine Einparkbahn 26 von der aktuellen Ausgangsposition I zu einer Zwischenposition II zwischen der Ausgangsposition I und einer Zielposition III in der Garage. Diese Einparkbahn 26 bis zur Zwischenposition II kann ausschließlich anhand der Bilder bestimmt werden. Liegt die Garage 16 bereits im Erfassungsbereich der Sensoren 13, 14, 15, so können gegebenenfalls auch die Sensordaten dieser Sensoren bei der Ermittlung der Einparkbahn 26 berücksichtigt werden. In diesem Falle kann die Einparkbahn 26 gegebenenfalls auch vollständig bis zur Zielposition III festgelegt werden.

Das Kraftfahrzeugs 1 wird dann semi-autonom oder vollautomatisch in die Zwischenposition II entlang der ermittelten Einparkbahn 26 geführt. Hierbei betätigt die Steuereinrichtung 3 zumindest die Lenkvorrichtung 4 und optional auch die Antriebs- und Bremseinrichtung 5.

Die Einparkbahn 26 wird so bestimmt, dass in der Zwischenposition II -wenn aufgrund der aktuellen Lage des Fahrzeugs I möglich - die Mittellängsachse 27 des Kraftfahrzeugs 1 mit einer Mittellängsachse 28 der Garage 16 zusammenfällt. Ist eine solche Positionierung des Fahrzeugs 1 nicht möglich, kann die Mittellängsachse 27 parallel zur Mittellängsachse 28 oder aber zumindest durch die Garageneinfahrt 17 verlaufen.

Bei Annäherung des Fahrzeugs 1 an die Garageneinfahrt 17 - etwa in der Zwischenposition II - gelangt die Garageneinfahrt und dann auch die Wände 29, 30 der Garage 16 in den Erfassungsbereich der Sensoren 13, 14, 15. Die Sensoren erfassen nun die Abstände zu der Garage 16, und insbesondere zu den Begrenzungen bzw. Kanten 18, 19 der Garageneinfahrt 17. Abhängig von diesen Sensordaten kann nun die Einparkbahn 26 bis zur Zielposition III vervollständigt werden oder aber eine bereits ursprünglich vollständig ermittelte Einparkbahn 26 kann korrigiert werden. Ab der Zwischenposition II kann das Kraftfahrzeug 1 auch derart geregelt in die Garage 16 geführt werden, dass die Abstände von dem Fahrzeug 1 zu den Wänden 39, 30 gleich bleiben. Somit wird eine mittige Positionierung des Fahrzeugs 1 in der Garage 16 ermöglicht. Die Einparkbahn 26 kann nun auch fortlaufend abhängig von den jeweils aktuellen Sensordaten korrigiert werden, um gegebenenfalls in der Garage 16 befindliche Hindernisse 31 umfahren zu können. In dem in Fig. 3 dargestellten Szenario wird das Hindernis 31 detektiert, und das Kraftfahrzeug 1 wird nicht direkt in der Mitte zwischen den Wänden 29, 30, sondern kollisionsfrei links neben dem Hindernis 31 eingeparkt.

Optional kann anhand der Bilder auch die Höhe der Garageneinfahrt 17 anhand einer Länge der Kanten 18, 19 im Bild ermittelt werden. Diese Höhe kann dann mit der Höhe des Fahrzeugs 1 verglichen werden, und es kann gegebenenfalls ein Warnsignal ausgegeben werden, mittels welchem der Fahrer darauf hingewiesen wird, dass aufgrund der zu geringen Höhe der Garageneinfahrt 17 kein Parkvorgang möglich ist.

Der Fahrer kann den Parkvorgang auch jederzeit unterbrechen. Dies erfolgt beispielsweise mittels einer Fernbedienung oder aber - wenn sich der Fahrer im Fahrzeug 1 befindet - mittels einer fahrzeugfesten Bedieneinrichtung.

## Patentansprüche

1. Verfahren zum Durchführen eines zumindest semi-autonomen Parkvorgangs eines Kraftfahrzeugs (1) in eine Garage (16), wobei mittels eines Parkassistenzsystems (2) des Kraftfahrzeugs (1) die Garage (16) detektiert wird und eine aktuelle Lage des Kraftfahrzeugs (1) relativ zur Garage (16) bestimmt wird, und wobei nach Detektion der Garage (16) der zumindest semi-autonome Parkvorgang abhängig von der aktuellen Lage des Kraftfahrzeugs (1) relativ zur Garage (16) durchgeführt wird,
wobei mittels einer Kamera (8, 10, 11, 12) des Parkassistenzsystems (2) ein Bild der Garage (16) erfasst wird und das Detektieren der Garage (16) umfasst, dass mittels einer Bildverarbeitungseinrichtung (6) des Parkassistenzsystems (2) das Bild einer Mustererkennung hinsichtlich einer Garageneinfahrt (17) unterzogen wird und mittels der Mustererkennung die Garage (16) identifiziert wird und wobei als Muster der Garageneinfahrt (17) zumindest eine vertikale und eine horizontale, die Garageneinfahrt (17) begrenzende Kanten (18, 19, 20) mittels der Bildverarbeitungseinrichtung (6) in dem Bild detektiert werden
**dadurch gekennzeichnet, dass**
die Bestimmung der aktuellen Lage des Kraftfahrzeugs (1) relativ zur Garage (16) umfasst, dass anhand eines Winkels zumindest einer der Ecken (21, 22), eine aktuelle Ausrichtung des Kraftfahrzeugs (1) bezüglich der Garage (16) bestimmt wird.

2. Verfahren nach Anspruch 1, **dadurch gekennzeichnet, dass** die Bestimmung der aktuellen Lage des Kraftfahrzeugs (1) relativ zur Garage (16) weiterhin umfasst, dass anhand des Abbilds der Garageneinfahrt (17) nämlich anhand einer Ausrichtung zumindest einer der Kanten (18, 19, 20) in dem Bild eine aktuelle Ausrichtung des Kraftfahrzeugs (1) bezüglich der Garage (16) bestimmt wird.

3. Verfahren nach Anspruch 1 oder 2,
**dadurch gekennzeichnet, dass**
das Identifizieren der Garage (16) umfasst, dass ein Verhältnis der jeweiligen Längen der vertikalen Kante (18, 19) und der horizontalen Kante (20) im Bild bestimmt wird.

4. Verfahren nach einem der vorhergehenden Ansprüche,
**dadurch gekennzeichnet, dass**
die Bestimmung der aktuellen Lage des Kraftfahrzeugs (1) relativ zur Garage (16) umfasst, dass anhand des Abbilds der Garageneinfahrt (17) eine Entfernung des Kraftfahrzeugs (1) von der Garage (16) und/oder eine aktuelle Position (I) des Kraftfahrzeugs (1) bezüglich der Garage (16) bestimmt wird.

5. Verfahren nach einem der vorhergehenden Ansprüche,
**dadurch gekennzeichnet, dass**
die Garageneinfahrt (17) mittels zumindest eines von der Kamera (8, 10, 11, 12) verschiedenen Sensors (13, 14, 15), insbesondere zumindest eines Abstandssensors, des Parkassistenzsystems (2) erfasst wird und das Identifizieren der Garage (16) anhand von Sensordaten des zumindest einen Sensors (13, 14, 15) plausibilisiert wird.

6. Verfahren nach einem der vorhergehenden Ansprüche,
**dadurch gekennzeichnet, dass**
anhand des Abbilds der Garageneinfahrt (17), insbesondere anhand der Länge zumindest einer der vertikalen Kanten (18, 19) in dem Bild, eine Höhe der Garageneinfahrt (17) bestimmt und mit einer Höhe des Kraftfahrzeugs (1) verglichen wird.

7. Verfahren nach einem der vorhergehenden Ansprüche,
**dadurch gekennzeichnet, dass**
anhand des Abbilds der Garageneinfahrt (17), insbesondere abhängig von der anhand des Abbilds ermittelten Ausrichtung des Kraftfahrzeugs (1) relativ zur Garage (16) und/oder abhängig von der anhand des Abbilds ermittelten Entfernung des Kraftfahrzeugs (1) von der Garageneinfahrt (17) und/oder abhängig von der anhand des Abbilds ermittelten aktuellen Position des Kraftfahrzeugs (1) bezüglich der Garage (16), eine Einparkbahn (26) von einer aktuellen Position (I) des Kraftfahrzeugs (1) zumindest zu einer Zwischenposition (II) zwischen der aktuellen Position (I) und einer Zielposition (III) in der Garage (16) ermittelt wird und das Kraftfahrzeug (1) entlang der Einparkbahn (26) geführt wird.

8. Verfahren nach Anspruch 7,
**dadurch gekennzeichnet, dass**
die Einparkbahn (26) derart bestimmt wird, dass in der Zwischenposition (II) eine Mittellängsachse (27) des Kraftfahrzeugs (1) durch die Garageneinfahrt (17) verläuft, insbesondere parallel zu einer Mittellängsachse (28) der Garage (16) orientiert ist, bevorzugt mit der Mittellängsachse (28) der Garage (16) zusammenfällt.

9. Verfahren nach Anspruch 7 oder 8,
**dadurch gekennzeichnet, dass**
bei Annäherung des Kraftfahrzeugs (1) an die Garage (16), insbesondere nach Erreichen der Zwischenposition (II), die Garage (16) mittels zumindest eines von der Kamera (8, 10, 11, 12) verschiedenen Sensors (13, 14, 15), insbesondere zumindest eines Abstandssensors, des Parkassistenzsystems (2) erfasst wird und anhand von Sensordaten des zumindest einen Sensors (13, 14, 15) die Einparkbahn (26) bis zur Zielposition (III) vervollständigt wird oder eine bereits anhand des Bildes ermittelte vollständige Einparkbahn (26) korrigiert wird.

10. Verfahren nach Anspruch 9,
**dadurch gekennzeichnet, dass**
nach Erfassen der Garage (16) durch den zumindest einen Sensor (13, 14, 15) die Einparkbahn (26) fortlaufend anhand von jeweils aktuellen Sensordaten des zumindest einen Sensors (13, 14, 15) korrigiert wird.

## Claims

1. Method for carrying out an at least semi-autonomous parking process of a motor vehicle (1) into a garage (16), wherein the garage (16) is detected by means of a parking assistance system (2) of the motor vehicle (1), and a current position of the motor vehicle (1) relative to the garage (16) is determined, and wherein after detection of the garage (16) the at least semi-autonomous parking process is carried out as a function of the current position of the motor vehicle (1) relative to the garage (16),
wherein an image of the garage (16) is captured by means of a camera (8, 10, 11, 12) of the parking assistance system (2), and the detection of the garage (16) comprises subjecting the image to a pattern recognition process with respect to a garage entry (17) by means of an image processing device (6) of the parking assistance system (2), and the garage (16) is identified by means of the pattern recognition process, and wherein at least one vertical and one horizontal edge (18, 19, 20), which bound the garage entry (17), are detected as patterns of the garage entry (17) in the image by means of the image processing device (6),
**characterized in that**
the determination of the current position of the motor vehicle (1) relative to the garage (16) comprises a current orientation of the motor vehicle (1) with respect to the garage (16) being determined on the basis of an angle of at least one of the corners (21, 22) .

2. Method according to Claim 1, **characterized in that** the determination of the current position of the motor vehicle (1) relative to the garage (16) also comprises a current orientation of the motor vehicle (1) with respect to the garage (16) being determined on the basis of the representantion of the garage entry (17), specifically on the basis of an orientation of at least one of the edges (18, 19, 20) in the image.

3. Method according to Claim 1 or 2,
**characterized in that** the identification of the garage (16) comprises a ratio of the respective lengths of the vertical edge (18, 19) and of the horizontal edge (20) in the image being determined.

4. Method according to one of the preceding claims,
**characterized in that**
the determination of the current position of the motor vehicle (1) relative to the garage (16) comprises a distance of the motor vehicle (1) from the garage (16) and/or a current position (I) of the motor vehicle (1) with respect to the garage (16) being determined on the basis of the representation of the garage entry (17).

5. Method according to one of the preceding claims,
**characterized in that**
the garage entry (17) is captured by means of at least one sensor (13, 14, 15), in particular at least one distance sensor, of the parking assistance system (2), which sensor is different from the camera (8, 10, 11, 12), and the plausibility of the identification of the garage (16) is checked on the basis of sensor data of the at least one sensor (13, 14, 15) .

6. Method according to one of the preceding claims,
**characterized in that**
a height of the garage entry (17) is determined on the basis of the representation of the garage entry (17), in particular on the basis of the length of at least one of the vertical edges (18, 19) in the image and is compared with a height of the motor vehicle (1).

7. Method according to one of the preceding claims,
**characterized in that**
a parking path (26) from a current position (I) of the motor vehicle (1) at least to one intermediate position (II) between the current position (I) and a target position (III) in the garage (16) is obtained on the basis of the representation of the garage entry (17), in particular as a function of the orientation, obtained on the basis of the representation, of the motor vehicle (1) relative to the garage (16) and/or as a function of the distance, obtained on the basis of the representation, of the motor vehicle (1) from the garage entry (17) and/or as a function of the current position, obtained on the basis of the representation, of the motor vehicle (1) with respect to the garage (16), and the motor vehicle (1) is guided along the parking path (26).

8. Method according to Claim 7,
**characterized in that**
the parking path (26) is determined in such a way that in the intermediate position (II) a central longitudinal axis (27) of the motor vehicle (1) runs through the garage entry (17) in particular is oriented parallel to a central longitudinal axis (28) of the garage (16) and preferably coincides with the central longitudinal axis (28) of the garage (16).

9. Method according to Claim 7 or 8,
**characterized in that**
when the motor vehicle (1) approaches the garage (16), in particular after the intermediate position (II) has been reached, the garage (16) is sensed by means of at least one sensor (13, 14, 15), in particular at least one distance sensor of the parking assistance system (2), which sensor is different from the camera (8, 10, 11, 12), and the parking path (26) up to the target positon (III) is completed on the basis of sensor data of the at least one sensor (13, 14, 15), or a complete parking path (26) which has already been obtained on the basis of the image is corrected.

10. Method according to Claim 9,
**characterized in that**
after the garage (16) has been sensed by the at least one sensor (13, 14, 15), the parking path (26) is continuously corrected on the basis of respective current sensor data of the at least one sensor (13, 14, 15).

## Revendications

1. Procédé d'exécution d'une opération de stationnement au moins semi-autonome d'un véhicule automobile (1) dans un garage (16), le garage (16) étant détecté au moyen d'un système d'assistance au stationnement (2) du véhicule automobile (1) et une position actuelle du véhicule automobile (1) par rapport au garage (16) étant déterminée, et l'opération de stationnement au moins semi-autonome étant exécutée après la détection du garage (16) en fonction de la position actuelle du véhicule automobile (1) par rapport au garage (16) ,
une image du garage (16) étant acquise au moyen d'une caméra (8, 10, 11, 12) du système d'assistance au stationnement (2) et la détection du garage (16) comprenant le fait que l'image, au moyen d'un dispositif de traitement d'images (6) du système d'assistance au stationnement (2), soit soumise à une reconnaissance de modèle dans la perspective d'une entrée de garage (17) et le garage (16) soit identifié au moyen de la reconnaissance de modèle et au moins un bord vertical et un bord horizontal (18, 19, 20) qui délimitent l'entrée de garage (17) étant détectés dans l'image, en tant que modèle de l'entrée de garage (17), au moyen du dispositif de traitement d'images (6)
**caractérisé en ce que**
la détermination de la position actuelle du véhicule automobile (1) par rapport au garage (16) comprend le fait qu'une orientation actuelle du véhicule automobile (1) par rapport au garage (16) est déterminée à l'aide d'un angle d'au moins l'un des coins (21, 22).

2. Procédé selon la revendication 1, **caractérisé en ce que** la détermination de la position actuelle du véhicule automobile (1) par rapport au garage (16) comprend en outre le fait qu'une orientation actuelle du véhicule automobile (1) par rapport au garage (16) est déterminée à l'aide de la représentation de l'entrée de garage (17), à savoir à l'aide d'une orientation d'au moins l'un des bords (18, 19, 20) dans l'image.

3. Procédé selon la revendication 1 ou 2, **caractérisé en ce que** l'identification du garage (16) comprend le fait qu'un rapport entre les longueurs respectives du bord vertical (18, 19) et du bord horizontal (20) dans l'image est déterminé.

4. Procédé selon l'une des revendications précédentes, **caractérisé en ce que** la détermination de la position actuelle du véhicule automobile (1) par rapport au garage (16) comprend le fait qu'un éloignement du véhicule automobile (1) du garage (16) et/ou une position actuelle (I) du véhicule automobile (1) par rapport au garage (16) sont déterminés à l'aide de la représentation de l'entrée de garage (17).

5. Procédé selon l'une des revendications précédentes, **caractérisé en ce que** l'entrée de garage (17) est détectée au moyen d'au moins un capteur (13, 14, 15) différent de la caméra (8, 10, 11, 12), notamment d'au moins un capteur de distance, du système d'assistance au stationnement (2) et la plausibilité de l'identification du garage (16) est vérifiée à l'aide des données de capteur de l'au moins un capteur (13, 14, 15).

6. Procédé selon l'une des revendications précédentes, **caractérisé en ce qu'**une hauteur de l'entrée de garage (17) est déterminée à l'aide de la représentation de l'entrée de garage (17), notamment à l'aide de la longueur d'au moins l'un des bords verticaux (18, 19) dans l'image, puis comparée à une hauteur du véhicule automobile (1).

7. Procédé selon l'une des revendications précédentes, **caractérisé en ce qu'**un parcours d'entrée en stationnement (26) depuis une position actuelle (I) du véhicule automobile (1) au moins vers une position intermédiaire (II) entre la position actuelle (I) et une position cible (III) dans le garage (16) est déterminé à l'aide de la représentation de l'entrée de garage (17), notamment en fonction de l'orientation du véhicule automobile (1) par rapport au garage (16) déterminée à l'aide de la représentation et/ou en fonction de l'éloignement du véhicule automobile (1) de l'entrée de garage (17) déterminé à l'aide de la représentation et/ou en fonction de la position actuelle du véhicule automobile (1) par rapport au garage (16) déterminée à l'aide de la représentation et le véhicule automobile (1) est guidé le long du parcours d'entrée en stationnement (26) .

8. Procédé selon la revendication 7, **caractérisé en ce que** le parcours d'entrée en stationnement (26) est déterminé de telle sorte que dans la position intermédiaire (II), un axe longitudinal central (27) du véhicule automobile (1) passe à travers l'entrée de garage (17), est notamment orienté parallèlement à un axe longitudinal central (28) du garage (16), de préférence coïncide avec l'axe longitudinal central (28) du garage (16) .

9. Procédé selon la revendication 7 ou 8, **caractérisé en ce que** lors de l'approche du véhicule automobile (1) du garage (16), notamment après avoir atteint la position intermédiaire (II), le garage (16) est balayé au moyen d'au moins un capteur (13, 14, 15) différent de la caméra (8, 10, 11, 12), notamment d'au moins un capteur de distance, du système d'assistance au stationnement (2) et, à l'aide des données de capteur de l'au moins un capteur (13, 14, 15), le parcours d'entrée en stationnement (26) jusqu'à la position cible (III) est complété ou un parcours d'entrée en stationnement (26) complet déjà déterminé à l'aide de l'image est corrigé.

10. Procédé selon la revendication 9, **caractérisé en ce qu'**après le balayage du garage (16) par l'au moins un capteur (13, 14, 15), le parcours d'entrée en stationnement (26) est continuellement corrigé à l'aide des données de capteur respectivement actuelles de l'au moins un capteur (13, 14, 15).
